# FASCICULE DE BREVET EUROPEEN

(11) **EP 1 798 399 B1**
(45) Date de publication et mention de la délivrance du brevet: **06.05.2015**
(21) Numéro de dépôt: 06125753.1
(22) Date de dépôt: 08.12.2006
(51) Int. Cl.: F04D 25/04, F02C 3/113, F02C 7/32, F02C 7/36

(54) **Système d'entraînement de machines auxiliaires d'un turbomoteur à double corps**
System zum Antrieb von Nebenaggregaten in einem zweiwelligen Turbinentriebwerk
Drive system for auxiliary machines of a twin spool turbine engine

(30) Priorité: 09.12.2005 FR 0553816
(43) Date de publication de la demande: 20.06.2007
(73) Titulaire: HISPANO-SUIZA, 92700 Colombes (FR)
(72) Inventeur: Linet, Hugues, Henri, Raymond, 92600 Asnieres sur Seine (FR); Mouchnino, Cyril, Franck, 75015 Paris (FR); Pettinotti, Serge, Dominique, 92400 Courbevoie (FR)
(74) Mandataire: David, Daniel

(56) Documents cités:
- DE-A1- 1 476 454
- FR-A- 2 076 589
- FR-A- 2 491 135
- GB-A- 1 092 745
- US-A- 3 899 877
- US-A- 4 018 316
- US-A- 4 699 021
- US-A- 5 694 765

## Description

La présente invention concerne le domaine des turbomoteurs à turbine à gaz, multi-corps, appliqués en aéronautique, et vise un moyen de prélèvement de puissance mécanique sur les arbres de rotor. Ce moyen a pour objet notamment l'entraînement des machines auxiliaires.

Un turbomoteur comprend, de façon générale, un groupe de compression d'air dont au moins une partie alimente une chambre de combustion. Les gaz issus de cette dernière entraînent un ou plusieurs étages de turbine reliés mécaniquement aux compresseurs et fournissent au moins une partie de la poussée. Un moteur à double corps comprend deux ensembles de rotors, à arbres concentriques et tournant librement mécaniquement l'un par rapport à l'autre. On distingue le corps basse pression, dit BP, et le corps haute pression, dit HP. Les turboréacteurs ou turbopropulseurs civils comprennent un rotor de soufflante ou d'hélice entraîné par le corps BP et délivrant une grande part de la poussée du moteur.

Une partie de la puissance fournie par le moteur est utilisée pour alimenter les servitudes à la fois du moteur lui-même et de l'avion dont il assure la propulsion.

Voir par exemple le document US-A-5 694 765.

Cette puissance est actuellement prélevée, en partie mécaniquement, sur l'arbre de l'étage HP du moteur pour entraîner un arbre récepteur de puissance d'un boîtier à engrenages à partir desquels les accessoires sont entraînés. Ce boîtier est aussi désigné AGB, pour Accessory Gear Box. Dans un turboréacteur à soufflante avant, ce boîtier est disposé sur le carter de celle-ci. Son arbre récepteur de puissance est généralement entraîné par un arbre de transmission logé dans un des bras structuraux du carter intermédiaire, et relié à travers un boîtier de renvoi d'angle à un pignon conique de prise de mouvement solidaire de l'arbre HP. Différentes machines auxiliaires, telles que des générateurs et des pompes hydrauliques à huile ou à carburant, sont installées et entraînées sur ce boîtier à engrenages. Une autre partie du prélèvement d'énergie est constituée par de l'air sous pression, soutiré au compresseur HP, pour assurer notamment la pressurisation et le conditionnement de la cabine de l'avion ou bien le dégivrage.

La tendance actuelle vise à augmenter la part du prélèvement de puissance mécanique en raison de la part croissante des moyens électriques, réputés plus souples d'emploi. Cette demande croissante de fourniture électrique pour les équipements de l'avion ne permet plus pour des raisons de fonctionnement et de performance du moteur, principalement à des régimes de rotation faible, de prélever la puissance uniquement sur le corps HP.

Cette augmentation de prélèvement de puissance pour les nouvelles applications de turbomoteurs nécessite donc la mise en oeuvre d'un système de prélèvement de puissance mécanique sur les corps HP et BP. L'invention a pour objet un moyen de prélèvement de puissance sur les deux rotors, ce prélèvement pouvant, en fonction du régime, être effectué sur l'un ou l'autre des deux rotors ou encore simultanément sur les deux.

Cependant les corps HP et BP tournent, de manière indépendante, à des vitesses différentes et possèdent des plages de fonctionnement différentes. Entre le régime de ralenti et le régime de plein gaz, le rapport des vitesses pour l'arbre HP est de l'ordre de deux ; la vitesse de rotation passe par exemple de 10.000 tours par minute à 20.000 tours par minute. En revanche, le rapport des vitesses pour l'arbre BP est de l'ordre de cinq ; sa vitesse passe par exemple de 900 tours par minute au ralenti à 4500 tours par minute au régime plein gaz. Il se pose alors le problème d'assurer un prélèvement compatible avec ces deux plages de fonctionnement distinctes. Ce problème est d'autant important à résoudre que les accessoires installés sur le boîtier sont adaptés pour fonctionner à l'intérieur de plages de vitesses compatibles avec celle du corps HP. On a vu qu'elle était nettement inférieure à celle du corps BP.

La présente invention a ainsi pour objet également un moyen de prélèvement de puissance mécanique mixte sur les corps HP et BP tout en fournissant à l'AGB une plage de fonctionnement qui soit compatible avec le fonctionnement des équipements ou accessoires montés sur le boîtier AGB.

Pour réaliser ces objectifs, l'invention porte sur un turbomoteur selon la revendication 1.

Ainsi, grâce au moyen d'embrayage, on peut répartir simplement le prélèvement de puissance entre les deux rotors selon le régime du moteur.

Plus particulièrement, le moyen d'embrayage est agencé de façon à ce que le changement de rapports sous charge, s'effectue sans rupture dans la transmission du couple. De préférence encore, le premier moyen d'embrayage est une transmission à double embrayage, connue en soi. Le changement de vitesse ne se fait que par pilotage des embrayages ; le rapport suivant est nécessairement disponible.

L'invention porte également sur le mode de fonctionnement du système, selon lequel à faible régime du moteur le premier rapport de la boîte de vitesse est embrayé, puis le deuxième rapport est embrayé à un régime plus élevé. De préférence, le deuxième moyen d'embrayage est débrayé quand le premier moyen d'embrayage est embrayé, et, aux régimes élevés notamment à plein régime, le deuxième moyen d'embrayage est embrayé et le premier moyen d'embrayage est débrayé.

Au démarrage, l'une ou l'autre ou les deux des premières ou deuxièmes machines comprenant un moyen de démarrage du moteur, le premier embrayage est débrayé et le deuxième embrayage embrayé, assurant ainsi l'entraînement du rotor HP.

L'embrayage répond à la contrainte de démarrage et en outre l'utilisation d'un troisième rapport permet ainsi d'optimiser le système.

D'autres caractéristiques et avantages de l'invention ressortiront de la description qui suit d'un mode de réalisation non limitatif en référence aux dessins annexés sur lesquels
La figure 1 est une représentation schématique d'un système d'entraînement de machines auxiliaires conforme à l'invention;
La figure 2 illustre le fonctionnement du système au démarrage ;
Les figures 3 et 4 illustrent le fonctionnement multi-corps du système pour chacun des deux rapports de la boîte de vitesse ;
La figure 5 illustre le fonctionnement du système en prélèvement mono corps ;
La figure 6 représente l'évolution de la vitesse de la seconde chaîne de puissance selon le régime du moteur.

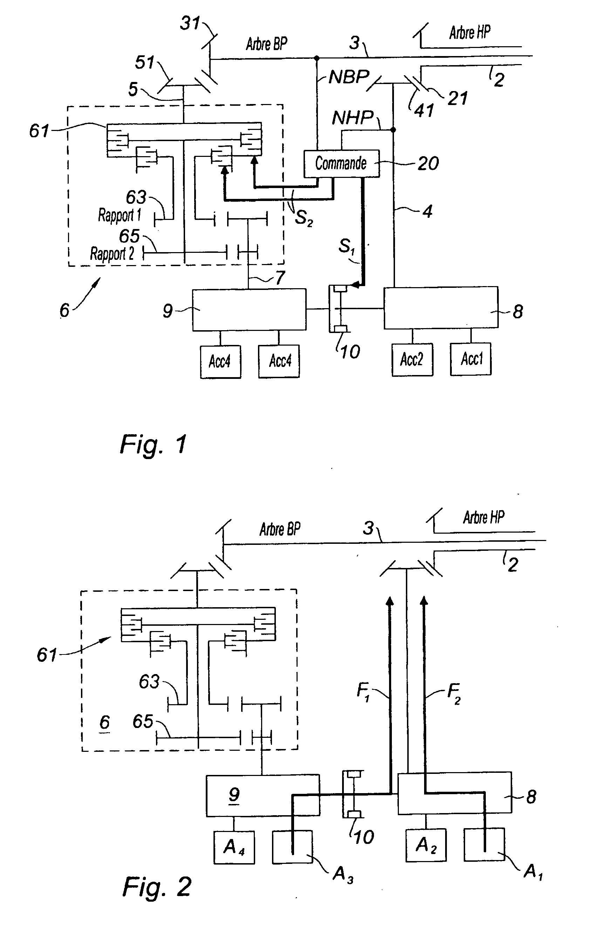

Les éléments représentés sur la figure 1 sont schématiques. Ils constituent des éléments fonctionnels sans comprendre de véritables détails sur leur structure réelle. Il appartient à l'homme du métier d'y associer des moyens appartenant à l'état de la technique.

Du turbomoteur, on ne retient sur la figure que l'arbre 2 du rotor HP et l'arbre 3 du rotor BP. Les deux arbres sont concentriques et tournent librement l'un par rapport à l'autre. Les autres parties du moteur ne sont pas concernées par l'invention et peuvent être quelconques. Chaque arbre est solidaire d'un pignon conique, 21 et 31. Le pignon 21 entraîne un arbre de transmission 4 par un pignon conique 41.

L'arbre 4 entraîne, par l'intermédiaire d'une première chaîne de puissance 8, des premières machines auxiliaires, ici deux A1 et A2. Cette chaîne de puissance est un train d'engrenages fixes, tel qu'un AGB.

L'arbre 3 du rotor BP entraîne un arbre 5 par le pignon conique 51. Cet arbre 5 constitue l'arbre d'entrée d'une boîte de vitesse 6. L'arbre de sortie 7 de la boîte de vitesse entraîne des deuxièmes machines accessoires A3, A4 par l'intermédiaire d'une seconde chaîne de puissance 9 qui est de préférence également un train d'engrenages fixes.

La boîte 6, conformément à ce mode de réalisation est à deux rapports, 63 et 65, reliés à l'arbre d'entrée 5 par un premier moyen d'embrayage 61, ici un embrayage double. Le nombre de rapports peut cependant être plus élevé.

Un deuxième moyen embrayage 10 relie la chaîne de puissance 8 à la chaîne 9. Il peut s'agir d'un embrayage, tel que connu en soi, simple, d'un coupleur hydraulique, d'une roue libre ou autre.

Une unité de commande 20 reçoit des signaux Nhp et Nbp représentatifs des vitesses de rotation des rotors respectifs, et, en application de son programme incorporé, envoie un signal approprié de commande aux organes d'actionnement des premier et second moyens d'embrayage 61 ou 10.

On décrit maintenant le mode de fonctionnement du système d'entraînement.

En mode démarrage, il s'agit de fournir l'ensemble de la puissance du ou des moyens de démarrage au corps HP du moteur. Dans ce but le premier moyen d'embrayage 61 est désaccouplé et le second 10 est accouplé. Les deux chaînes de puissance sont liées. Les flèches F1 et F2 de la figure 2 illustrent la transmission de puissance depuis les moyens de démarrage parmi les premiers et deuxièmes machines. Ainsi, quelle que soit la position des accessoires servant au démarrage, la puissance de démarrage est fournie dans son intégralité au corps HP.

En mode de prélèvement multi-corps correspondant aux régimes de moteur faibles, la boîte de vitesse à deux rapports de vitesses permet de rendre compatible la plage de vitesse du rotor BP avec celles des accessoires installés sur la seconde chaîne de puissance.

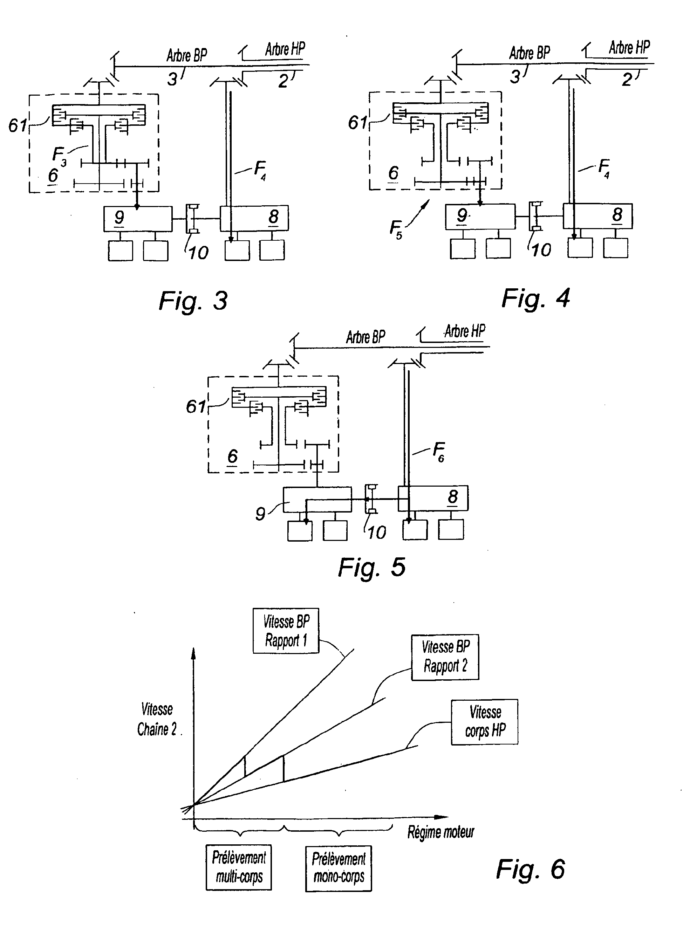

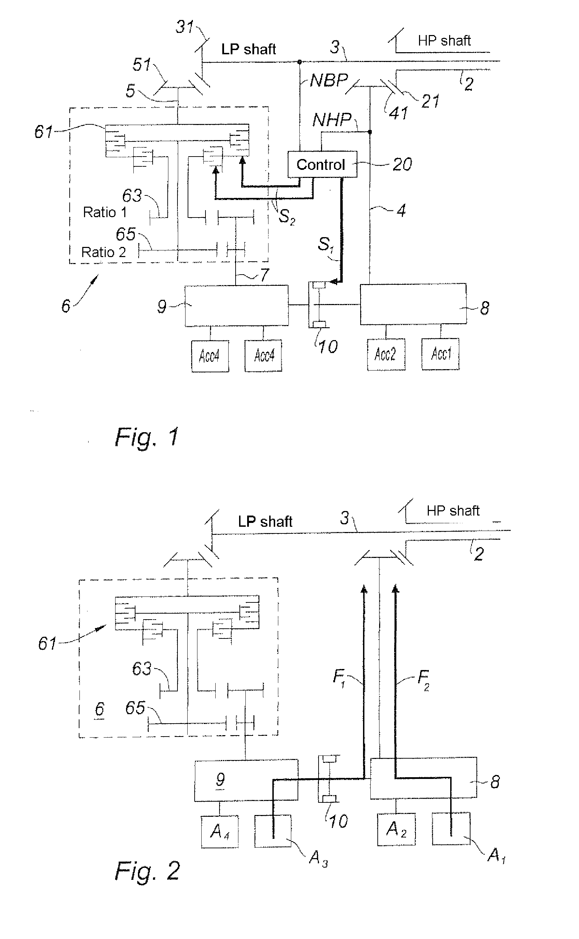

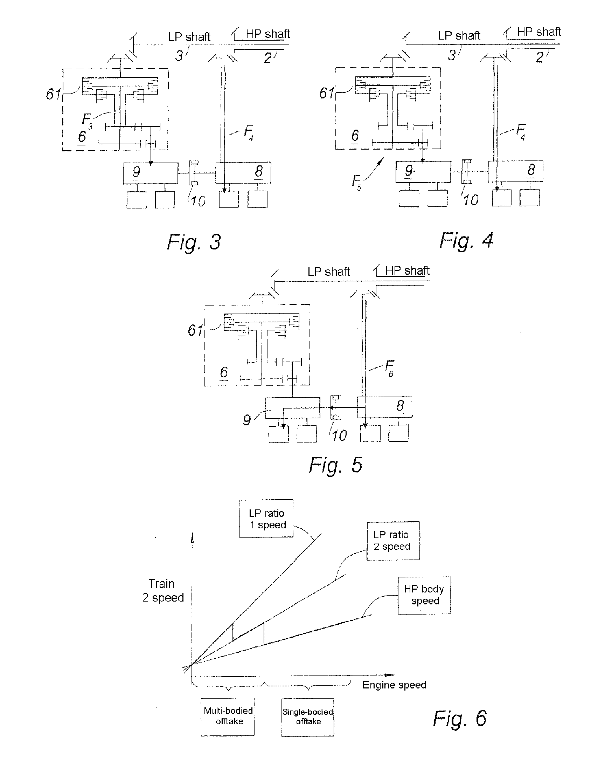

Dans une première plage de régime du moteur, la commande 20 assigne au premier moyen d'embrayage 61 d'accoupler le premier rapport 63 à l'arbre 5. Sur la figure 3 la flèche F3 illustre la transmission de la puissance depuis l'arbre 3 du rotor BP jusqu'à la chaîne de puissance 9 pour entraîner les deuxièmes machines accessoires.

La flèche F4 montre l'entraînement de la première chaîne 8 par l'arbre HP.

Le second moyen d'embrayage 10 est désaccouplé.

La figure 4 illustre par les flèches F5 et F4, cette dernière étant inchangée, la transmission de puissance entre les rotors et les machines à un régime moteur plus élevé. On utilise le deuxième rapport 65 de la boîte de vitesse 6. Le second moyen d'embrayage 10 reste désaccouplé. La boîte de vitesse à deux rapports permet d'avoir le second rapport toujours disponible et de pouvoir l'engager par simple commande de l'embrayage double sans changement d'engrènement.

En mode de prélèvement mono corps correspondant au domaine de régimes élevés, le premier moyen d'embrayage 61 est désaccouplé interrompant la liaison du système avec le corps BP. L'accouplement de second moyen d'embrayage 10 lie les chaînes de puissance 8 et 9. Toute la puissance des accessoires est prélevée depuis le corps HP. Cela est illustré sur la figure 5 par la flèche double F6.

La figure 6 est un schéma illustrant l'évolution de la vitesse de rotation des secondes machines sur la chaîne de puissance 9, en fonction du régime du moteur.

La vitesse croît avec le premier rapport 63 de la boîte de vitesse, puis à un régime donné le second rapport 65 est engagé la vitesse croît selon cette nouvelle loi. Enfin l'embrayage 61 est désaccouplé alors que le second embrayage est accouplé ; la vitesse des accessoires suit alors la loi du corps HP.

Il est à noter que moyennant une loi de commande appropriée le passage d'un rapport à l'autre se fait sans interruption de transmission de puissance.

Le système de l'invention permet ainsi de fournir des moyens d'entraînement des deux chaînes de puissance compatibles avec les équipements moteur et avion ;
transmettre de la puissance issue du corps BP aux accessoires ;
assurer le démarrage du moteur en fournissant de la puissance au corps HP uniquement.

## Revendications

1. Turbomoteur à double corps avec un arbre (3) du rotor basse pression BP et un arbre (2) du rotor haute pression HP comprenant des premières (A1, A2) et deuxièmes (A3, A4) machines auxiliaires,
une première chaîne de puissance (8) entre l'arbre (2) du rotor HP et les premières machines (A1, A2) agencée de manière à entraîner mécaniquement celles-ci,
une deuxième chaîne (9) de puissance entre l'arbre (3) du rotor BP et les deuxièmes machines (A3, A4) agencée de manière à entraîner lesdites deuxièmes machines (A3, A4), et **caractérisé par le fait qu'**il comprend :
une boîte de vitesse (6) à au moins deux rapports de vitesse (63, 65) reliée en entrée à l'arbre (3) et en sortie à la deuxième chaîne (9) de puissance, un premier moyen d'embrayage (61) étant agencé pour embrayer sélectivement l'un ou l'autre desdits deux rapports de vitesse ou bien pour débrayer la transmission mécanique depuis l'arbre (3) du rotor BP.
un deuxième moyen d'embrayage (10) entre la première chaîne de puissance (8) et la deuxième chaîne (9) de puissance permettant l'entraînement des deuxièmes machines (A3, A4) auxiliaires par l'arbre (2) du rotor HP,
un moyen de commande (20) comprenant comme paramètres d'entrée des signaux de vitesse des deux arbres des corps BP et HP et comme paramètres de sortie des signaux de commande des deux moyens d'embrayage (61, 10).

2. Turbomoteur selon la revendication 1 selon lequel à faible régime au ralenti du turbomoteur le premier rapport (63) de la boîte de vitesse (6) est embrayé, puis le deuxième rapport (65) lorsque le turbomoteur fonctionne à un régime plus élevé.

3. Turbomoteur selon la revendication 2 selon lequel le deuxième moyen d'embrayage (10) est débrayé quand le premier moyen d'embrayage (61) est embrayé.

4. Turbomoteur selon la revendication 3 selon lequel, à plein régime du turbomoteur, le deuxième moyen d'embrayage (10) est embrayé et le premier moyen d'embrayage (61) est débrayé.

5. Turbomoteur selon la revendication 1 selon lequel au démarrage l'une ou l'autre des premières ou deuxièmes machines comprenant un moyen de démarrage du moteur, le premier moyen d'embrayage (61) est débrayé et le deuxième moyen d'embrayage (10) est embrayé.

## Patentansprüche

1. Turbomaschine mit doppelten Körper mit einer Welle (3) des Niederdruckrotors BP und einer Welle (2) des Hochdruckrotors HP, der erste (A1, A2) und zweite (A3, A4) Hilfsmaschinen aufweist,
ein erster Leistungsstrang (8) zwischen der Welle (2) des Hochdruckrotors und den ersten Maschinen (A1, A2), der derart eingerichtet ist, dass er diese mechanisch antreibt,
ein zweiter Leistungsstrang (9) zwischen der Welle (3) des Niederdruckrotors und den zweiten Maschinen (A3, A4), der derart eingerichtet ist, dass er die zweiten Maschinen (A3, A4) antreibt, und **dadurch gekennzeichnet, dass** er Folgendes aufweist:
ein Schaltgetriebe (6) mit mindestens zwei Gängen (63, 65), das am Eingang der Welle (3) und am Ausgang des zweiten Leistungsstrangs (9) verbunden ist, wobei ein erstes Kupplungsmittel (61) eingerichtet ist, um selektiv den einen oder den anderen der zwei Gänge einzulegen, oder um die mechanische Kraftübertragung von der Welle (3) des Niederdruckrotors auszurücken,
ein zweites Kupplungsmittel (10) zwischen dem ersten Leistungsstrang (8) und dem zweiten Leistungsstrang (9), das das Antreiben der zweiten Hilfsmaschinen (A3, A4) durch die Welle (2) des Hochdruckrotors erlaubt,
ein Steuermittel (20), das als Eingangsparameter Drehzahlsignale der zwei Wellen des Hochdruck- und des Niederdruckkörpers und als Ausgangsparameter Steuersignale der zwei Kupplungsmittel (61, 10) aufweist.

2. Turbomotor nach Anspruch 1, wobei bei niedriger Drehzahl beim Leerlauf des Turbomotors der erste Gang (63) des Schaltgetriebes (6) eingerückt wird, dann der zweite Gang (65), wenn der Turbomotor mit einer höheren Drehzahl arbeitet.

3. Turbomotor nach Anspruch 2, wobei das zweite Kupplungsmittel (10) ausgerückt wird, wenn das erste Kupplungsmittel (61) eingerückt wird.

4. Turbomotor nach Anspruch 3, wobei bei voller Drehzahl des Turbomotors das zweite Kupplungsmittel (10) eingerückt wird und das erste Kupplungsmittel (61) ausgerückt wird.

5. Turbomotor nach Anspruch 1, wobei beim Anlassen die eine oder die der andere der ersten oder zweiten Maschine, die ein Anlassmittel des Motors aufweist, das erste Kupplungsmittel (61) ausgerückt und das zweite Kupplungsmittel (10) eingerückt wird.

## Claims

1. Double-bodies turbine engine with a shaft (3) of the low pressure LP rotor and a shaft (2) of the high pressure HP rotor comprising the first (A1, A2) and second (A3, A4) accessory machines,
a first power train (8) between the shaft (2) of the HP rotor and the first machines (A1, A2) arranged so as to mechanically drive the latter,
a second power train (9) between the shaft (3) of the LP rotor and the second machines (A3, A4) arranged so as to drive the said second machines (A3, A4), and **characterized in that** it comprises:
a gearbox (6) with at least two speed ratios (63, 65) connected at the input to the shaft (3) and at the output to the second power train (9), a first coupling means (61) being arranged to selectively couple one or other of the two ratios or else to decouple the mechanical transmission from the shaft (3) of the LP rotor,
a second coupling means (10) between the first power train (8) and the second power train (9) allowing the second accessory machines (A3, A4) to be driven by the shaft (2) of the HP rotor,
a control means (20) comprising as input parameters speed signals of the two shafts of the LP and HP body and as output parameters control signals of the two coupling means (61, 10).

2. Turbo engine according to Claim 1, whereby, at low speed of the turbine engine, the first ratio (63) of the gearbox (6) is coupled, then the second ratio (65) when the turbine engine operates at a higher speed.

3. Turbo engine according to Claim 2, whereby the second coupling means (10) is decoupled when the first coupling means (61) is coupled.

4. Turbo engine according to Claim 3, whereby at high speeds of the turbine engine the second coupling means (10) is coupled and the first coupling means (61) is decoupled.

5. Turbo engine according to Claim 1, whereby on start-up one or other of the first or second machines comprising a means of starting the engine, whereby the first coupling means (61) is decoupled and the second coupling means (10) is coupled.
